# EUROPÄISCHE PATENTSCHRIFT

(11) **EP 1 647 178 B1**
(45) Veröffentlichungstag und Bekanntmachung des Hinweises auf die Patenterteilung: **12.09.2007**
(21) Anmeldenummer: 06100210.1
(22) Anmeldetag: 02.07.2004
(51) Int. Cl.: A01F 7/06

(54) **Axialtrenneinrichtung**
Axial flow separator device
Dispositif séparateur à écoulement axial

(30) Priorität: 05.07.2003 DE 10330465
(43) Veröffentlichungstag der Anmeldung: 19.04.2006
(62) Teilanmeldung aus: 04103154.3
(73) Patentinhaber: Deere & Company, Moline, IL 61265-8098 (US)
(72) Erfinder: Weichholdt, Dirk, 57200, Sarreguemines (FR); Lauer, Fritz, 66894, Krähenberg (DE)
(74) Vertreter: Holst, Sönke

(56) Entgegenhaltungen:
- US-A- 4 198 802
- US-A- 5 342 239
- US-A- 5 356 338
- US-A- 5 913 724

## Beschreibung

Die Erfindung betrifft eine Axialtrenneinrichtung mit einem Gehäuse und einem darin drehbar angeordneten Rotor, der einen mantelförmigen Körper umfasst, der mit Guteingriffselementen versehen ist und um den sich wenigstens ein geschlossener, radialer Ring erstreckt.

Die US 5 913 724 A beschreibt einen Mähdrescher mit einer rotierenden Separiereinheit, an der ringförmige Elemente angeordnet sind, die als Träger für Zahnelemente dienen, welche das Stroh zerkleinern.

Die US 5 356 338 A schlägt einen Mähdrescher mit einer Dresch- und Trenntrommel vor, die koaxial zueinander angeordnet sind und mit unterschiedlichen Drehzahlen angetrieben werden. Zwischen ihnen ist ein ringförmiger Träger angeordnet, der zur Abstützung der Lager der Trommeln dient.

In der nachveröffentlichten DE 102 17 466 A wird zur Verminderung der Dribbelverluste vorgeschlagen, die Leitschienen im Winkel zum Radius des Rotors anzuordnen. Hier ist ein gewisser fertigungstechnischer Aufwand vonnöten.

Ein Problem, das sich bei Axialtrenneinrichtungen stellt, sind die so genannten Spritz- oder Dribbelverluste. Sie entstehen, wenn die Körner gegen die Leitschienen an der Oberseite des Gehäuses oder gegen die Kanten der am Rotor befestigten Zinken stoßen und in Richtung auf die Rückseite der Axialtrenneinrichtung reflektiert werden, wo sie den Mähdrescher verlassen und verloren gehen. Um die Dribbelverluste gering zu halten, ist eine relativ geringe Steigung der Leitschienen sinnvoll. Es ist zwar möglich, die mit den Leitschienen besetzten Deckplatten zur Anpassung an die jeweils zu erntende Gutart auszutauschen, was jedoch sehr aufwändig ist.

Die der Erfindung zu Grunde liegende Aufgabe wird darin gesehen, einen verbesserten Mähdrescher mit einer Axialtrenneinrichtung bereitzustellen, bei dem die erwähnten Nachteile vermieden werden bzw. in verringertem Maß auftreten.

Diese Aufgabe wird erfindungsgemäß durch die Lehren des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Körper des Rotors mit einem in sich geschlossenen Ring auszustatten, der sich radial vom Körper nach außen erstreckt. Der Ring reflektiert sich entlang der Achse des Rotors bewegende Körner und verhindert auf diese Weise die Dribbelverluste. Er wird vorzugsweise in der Nähe des Auswurfbereichs des Rotors angebracht, da dort die Dribbelverluste besonders effektiv bekämpft werden können. Die radialen äußeren Abmessungen des Rings entsprechen vorzugsweise denen der Guteingriffselemente des Rotors, während die inneren dem des Körpers entsprechen. Da die Länge des Rings in Achsrichtung des Rotors begrenzt ist, beeinflusst er die Gutförderung und das Trennverhalten nicht nachteilig, insbesondere, wenn das Oberteil des Gehäuses in seiner Nachbarschaft exzentrisch zum Rotor angeordnet ist und somit ein hinreichender Raum für das Erntegut bereitsteht, sich am Ring vorbei in Flussrichtung zu bewegen.

Die erfindungsgemäße Axialtrenneinrichtung kann auch einen Dreschabschnitt aufweisen. Alternativ ist ihr eine beliebige Drescheinrichtung, in der Regel eine Tangentialdreschtrommel, vorgeordnet.

In den Zeichnungen sind vier nachfolgend näher beschriebene Ausführungsbeispiele der Erfindung dargestellt. Es zeigt:
- Fig. 1: einen Mähdrescher mit einer Axialtrenneinrichtung in Seitenansicht und schematischer Darstellung,
- Fig. 2: eine Seitenansicht der Axialtrenneinrichtung,
- Fig. 3: eine perspektivische rückwärtige Ansicht des Auswurfabschnitts des Rotors,
- Fig. 4: eine Schnittzeichnung entlang der Linie 4-4 der Figur 2, und
- Fig. 5-7: perspektivische Ansichten von anderen Ausführungsformen des Rotors.

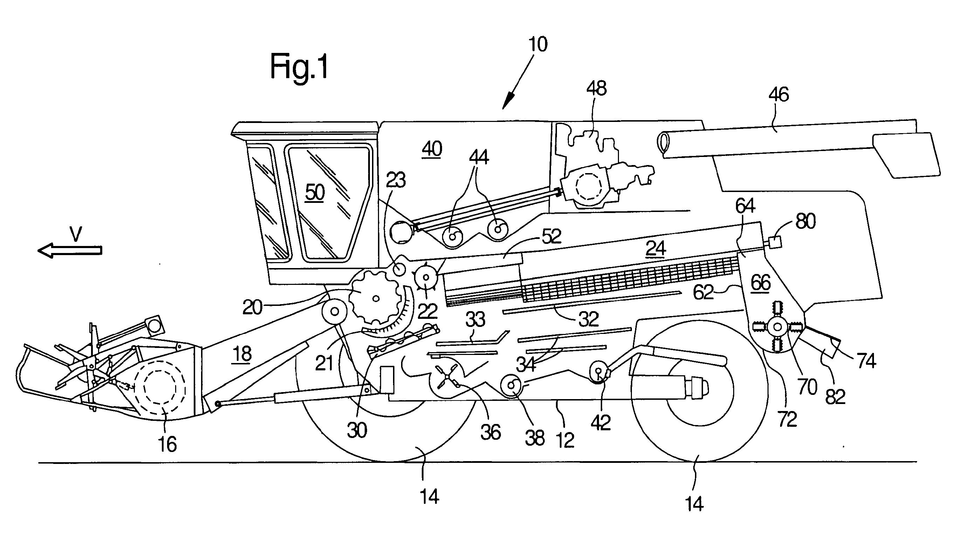

Die Figur 1 zeigt einen selbstfahrenden Mähdrescher 10 mit einem Tragrahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung 16 angeschlossen, um Erntegut von dem Feld zu ernten und es nach oben und hinten durch einen Schrägförderer 18 Dresch- und Trennmitteln zuzuführen. Die Dresch- und Trennmittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und eine Axialtrenneinrichtung zu verwenden, die einen Dreschabschnitt und einen Trennabschnitt aufweist. Es kann eine einzige Axialtrenneinrichtung oder zwei (oder mehrere) nebeneinander angeordnete Axialtrenneinrichtungen Verwendung finden. Eine Abstreifrolle 23 und eine Wendetrommel 22 führen gemeinsam mit einem Zufuhrgehäuse das gedroschene Erntegut von der Dreschtrommel 20 und dem Dreschkorb 21 der Axialtrenneinrichtung 24 zu. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus der Axialtrennvorrichtung 24 austreten, fallen auf einen Schüttelboden 32, der es zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben, der von einer Bedienungsperson aus einer Fahrerkabine 50 heraus gesteuert wird. Die verschiedenen Vorrichtungen zum Dreschen, Fördern, Reinigen und Abscheiden befinden sich innerhalb des Tragrahmens 12.

Von der Axialtrennvorrichtung 24 werden ausgedroschene Erntegutreste (Stroh) durch einen Auslass 64 an der Unterseite des rückwärtigen Endes der nach hinten geschlossenen Axialtrennvorrichtung 24 nach unten ausgeworfen. Durch die Wirkung der Fliehkraft und der Schwerkraft fallen die Erntegutreste in einen vertikalen Auswurfschacht 66, der nach vorn durch eine vordere Wand 62 begrenzt wird.

Unterhalb des Auswurfschachts 66 ist in einem Gehäuse 72 ein Strohhäcksler 70 angeordnet, der um eine horizontale, quer zur Fahrtrichtung verlaufende Achse (in der Figur im Gegenuhrzeigersinn) rotativ antreibbar ist. Er umfasst einen zylindrischen Rotationskörper mit pendelnd daran aufgehängten Häckselmessern, die mit im Gehäuse 72 angeordneten stationären Gegenmessern zusammenwirken, um die Erntegutreste zu häckseln und mittels einer mit Strohleitblechen 82 ausgestatteten Strohverteilerhaube 74 etwa über die Schnittbreite des Mähdreschers 10 auf dem Feld zu verteilen. In den Auswurfschacht 66 könnte eine separate Fördertrommel zum Fördern der Erntegutreste in den Strohhäcksler 70 eingefügt werden. Außerdem könnte ein verstellbares Strohleitblech vorhanden sein, das ein Umschalten zwischen dem Häckslerbetrieb und einem Schwadablagebetrieb erlaubt.

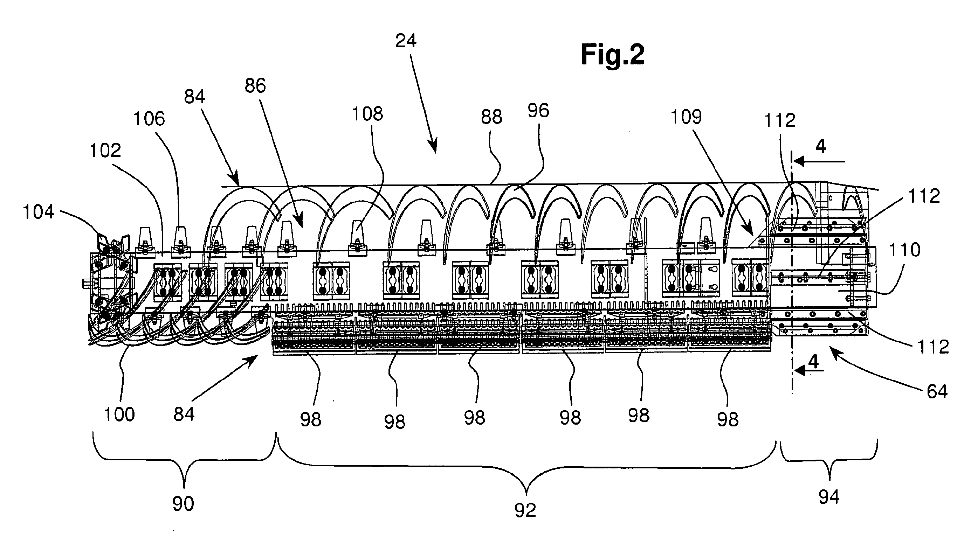

Die Figur 2 zeigt die Axialtrenneinrichtung 24 detaillierter. Sie setzt sich aus einem Gehäuse 84 und einem darin angeordneten Rotor 86 zusammen. Der Rotor 86 ist im Gehäuse 84 drehbar gelagert und wird an seiner Rückseite durch ein Getriebe 80 in Drehung versetzt. Die Axialtrenneinrichtung lässt sich in einen Einlassübergangsabschnitt 90, einen Trennabschnitt 92 und einen Auswurfabschnitt 94 untergliedern.

Das Gehäuse 84 umfasst ein sich über die Länge des Trennabschnitts 92 und des Auswurfabschnitts 94 erstreckendes deckelartiges Oberteil 88, an dessen Innenseite wendelförmige Leitschienen 96 angebracht sind. Außerdem weist das Gehäuse 84 im Trennabschnitt 92 an seiner Unterseite Trennkörbe 98 auf. Im Einlassübergangsabschnitt 90 ist das Gehäuse 84 mit wendelförmigen Leitschienen 100 ausgestattet. Zur Bildung des Auslasses 64 ist das Gehäuse 84 an seiner Unterseite im Auswurfabschnitt 94 ausgeschnitten und somit nach unten offen.

Der Rotor 86 umfasst einen hohlen, kreiszylindrischen Körper 102, der sich über die gesamte Länge des Rotors 86 erstreckt. An seiner in Fahrtrichtung V liegenden Vorderseite sind am Körper 102 plattenförmige Guteingriffselemente 104 angebracht, die das Erntegut aggressiv in den Einlassübergangsabschnitt 90 einziehen. In axialer Richtung schließen sich kleinere zinkenförmige Guteingriffselemente 106 an, die über die Länge des Einlassübergangsabschnitts 90 verteilt sind. Im Trennabschnitt 92 ist der Körper 102 mit ebenfalls zinkenförmigen Guteingriffselementen 108 versehen, die etwas größer als die Guteingriffselemente 106 im Einlassübergangsbereich 90 und in größeren Abständen voneinander angeordnet sind. Im Auswurfabschnitt 94 ist der Körper 102 mit konzentrischen schalenförmigen Elementen 110 versehen, die seinen Außendurchmesser dort unter Bildung einer Stufe 109 vergrößern. Um die Elemente 110 sind vier paddelförmige Austragförderelemente 112 verteilt, die sich in axialer Richtung des Rotors 84 erstrecken. Die Austragförderelemente 112 sind an ihrem vorderen und hinteren Ende abgeschrägt. Die Austragförderelemente 112 sind aus starrem Material (Stahl) hergestellt. Es könnte aber auch flexibles Material, wie Gummi, verwendet werden.

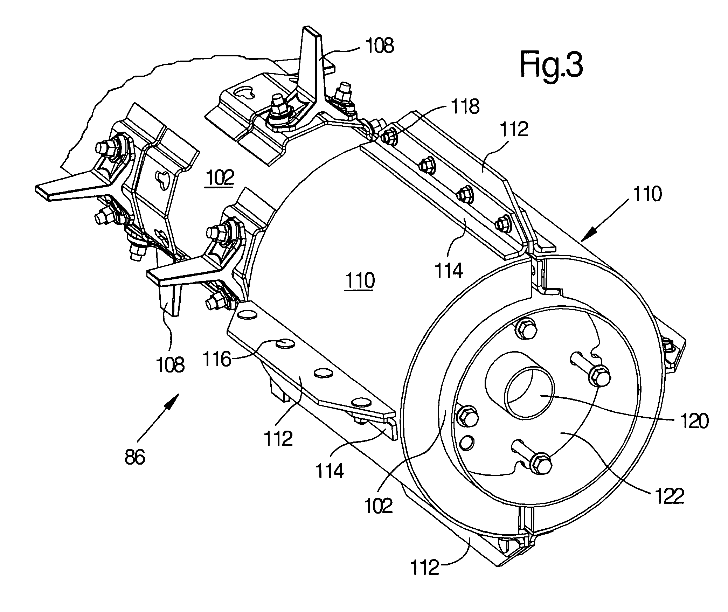

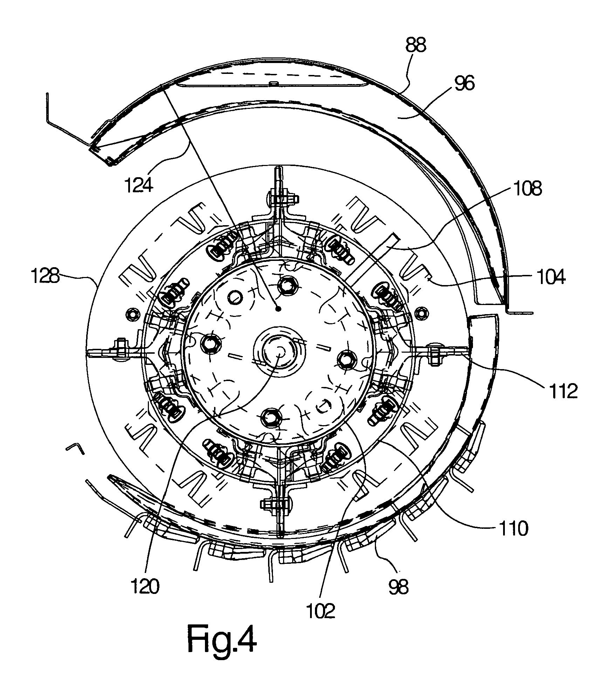

Der Auswurfabschnitt 94 des Rotors 86 ist in der Figur 3 in vergrößerter perspektivischer Ansicht wiedergegeben. Die beiden Elemente 110 erstrecken sich jeweils um die Hälfte des Umfangs des Körpers 102. Die Austragförderelemente 112 sind jeweils durch Paare auf die Elemente 110 aufgeschweißter, rechtwinkliger Konsolen 114 und sich durch die Konsolen 114 und Löcher in den Austragförderelementen 112 erstreckende Schrauben 116 und Muttern 118 mit den Elementen 110 verbunden. Die Schrauben und Muttern 118 der in Figur 4 oben und unten eingezeichneten Konsolen 114 fixieren auch die Elemente 110 aneinander und somit an dem Körper 102. Die Elemente 110 könnten auch an den Körper 102 geschweißt werden. Am rückwärtigen Ende des Körpers 102 ist eine Stirnwand 122 mit einer darin zentrisch angeordneten Buchse 120 zur Aufnahme einer Welle (nicht gezeigt) vorgesehen, die den Körper 102 mit dem Getriebe 80 verbindet.

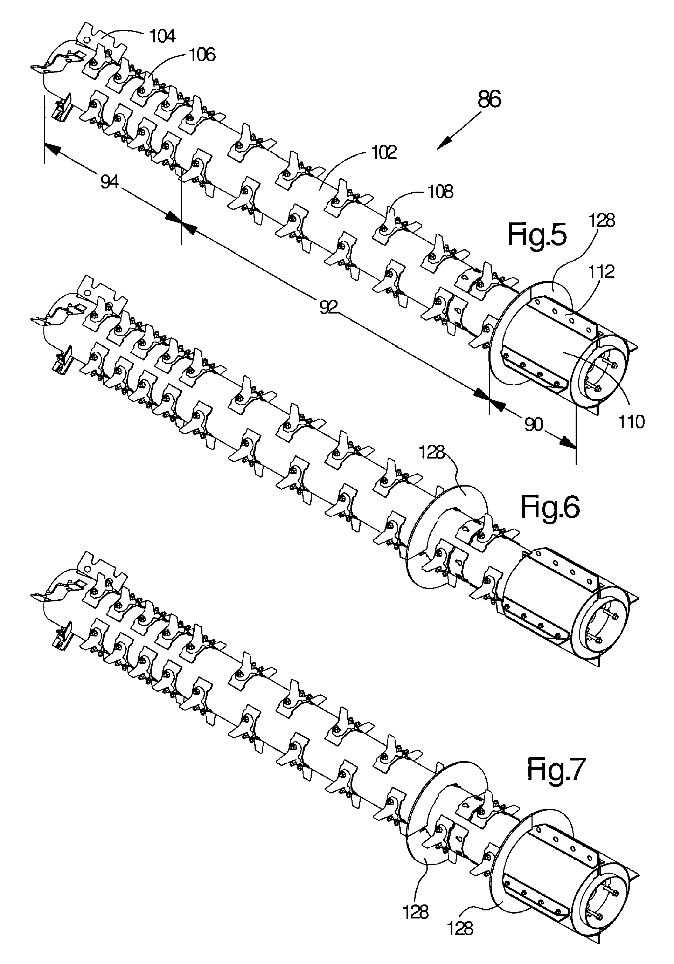

Die Figur 4 zeigt einen Schnitt durch den Auswurfbereich 94 der Axialtrenneinrichtung 24. Das Oberteil 88 des Gehäuses 84 definiert einen Kreisabschnitt mit einem Radius 124, dessen Mittelpunkt 126 oberhalb der Achse des Rotors 86 liegt. Mit dem Bezugszeichen 128 ist eine in den Figuren 5 bis 7 dargestellte Scheibe gekennzeichnet.

Durch die Verwendung der Elemente 110 steigt der Außendurchmesser des Körpers 102 des Rotors 86 im Auswurfabschnitt 94 stufenweise an. Wegen der exzentrischen Anordnung des Oberteils 88 hat das Erntegut einen hinreichenden Raum, um dieser Stufe 109 folgen zu können. Im Auswurfabschnitt 94 ist die Umfangsgeschwindigkeit des Rotors 86 gegenüber dem Trennabschnitt 92 gesteigert, was zu größeren Zentrifugalkräften und somit zu einem besseren Auswurfverhalten der Erntegutreste führt. Außerdem werden die so genannten Dribbelverluste vermindert, da sich in Achsrichtung des Rotors 86 nach hinten bewegende Körner an der Stufe 109 wieder nach vorn reflektiert werden und nicht verloren gehen.

In der Figur 5 ist eine andere Ausführungsform eines Rotors 86 dargestellt. Im Unterschied zur Ausführungsform nach Figur 2 bis 4 ist der (ansonsten damit identische) Rotor 86 mit einem zum Körper 102 koaxialen Ring 128 ausgestattet, der sich im Anfangsbereich des Auswurfabschnitts 94 befindet. Er dient dazu, sich in der Nähe des Körpers 102 des Rotors 86 nach hinten bewegende Körner nach vorn zu reflektieren, um die Dribbelverluste zu vermindern. Der Außendurchmesser des Rings 128 entspricht etwa dem Hüllkreisdurchmesser, der von den Guteingriffselementen 108 beschrieben wird, während sein Innendurchmesser dem Außendurchmesser des Körpers 102 entspricht. Der Ring 128 kann aus zwei Teilelementen zusammengesetzt sein, die auf den Körper 102 aufgesetzt und daran angeschweißt werden. Alternativ ist der Ring 128 in sich geschlossen und wird vor der Anbringung der Elemente 110 und/oder der Halterungen für die Guteingriffselemente 104, 106, 108 auf den Körper 102 aufgeschoben und daran fixiert.

In der Ausführungsform nach Figur 6 befindet sich der Ring 128 im letzten Viertel des Trennabschnitts 92. In der in Figur 7 gezeigten Ausführungsform sind zwei Ringe 128 vorgesehen, die jeweils an den Stellen angeordnet sind, die in der Figur 5 und der Figur 6 dargestellt sind.

## Patentansprüche

1. Axialtrenneinrichtung (24) mit einem Gehäuse (84) und einem darin drehbar angeordneten Rotor (86), der einen mantelförmigen Körper (102) umfasst, der mit Guteingriffselementen (104, 106, 108) versehen ist und um den sich wenigstens ein geschlossener, radialer Ring (128) erstreckt, **dadurch gekennzeichnet, dass** die radialen Abmessungen des Rings (128) etwa den radialen Abmessungen der Guteingriffselemente (104, 106, 108) entsprechen.

2. Axialtrenneinrichtung (24) nach Anspruch 1, **dadurch gekennzeichnet, dass** der Ring (128) in der Nachbarschaft des Auswurfbereichs (94) des Rotors (86) angeordnet ist.

3. Axialtrenneinrichtung (24) nach einem der vorhergehenden Ansprüche, **dadurch gekennzeichnet, dass** sie einen Dreschabschnitt aufweist oder dass ihr eine Drescheinrichtung (20) vorgeordnet ist.

4. Mähdrescher (10) mit einer Axialtrenneinrichtung (24) nach einem der vorhergehenden Ansprüche.

## Claims

1. Axial flow separator device device (24) having a housing (84) and a rotor (86) arranged rotatably therein, which rotor (86) comprises a cylindrical body (102), which is provided with crop-engaging elements (104, 106, 108) and around which there extends at least one continuous, radial ring (128), **characterized in that** the radial dimensions of the ring (128) correspond approximately to the radial dimensions of the crop-engaging elements (104, 106, 108).

2. Axial flow separator device (24) according to Claim 1, **characterized in that** the ring (128) is arranged in the vicinity of the ejection region (94) of the rotor (86).

3. Axial flow separator device (24) according to one of the preceding claims, **characterized in that** it comprises a threshing portion or **in that** a threshing means (20) is arranged upstream thereof.

4. Combine-harvester (10) having an axial flow separator device (24) according to one of the preceding claims.

## Revendications

1. Dispositif (24) de séparation axiale, qui présente un boîtier (84) dans lequel un rotor (86) qui présente un corps (102) en forme d'enveloppe doté d'éléments (104, 106, 108) d'engagement de produit et autour duquel s'étend au moins un anneau radial fermé (128) est installé à rotation, **caractérisé en ce que** les dimensions radiales de l'anneau (128) correspondent sensiblement aux dimensions radiales des éléments (104, 106, 108) d'engagement de produit.

2. Dispositif de séparation axiale (24) selon la revendication 1, **caractérisé en ce que** l'anneau (128) est disposé au voisinage de la zone (94) d'expulsion du rotor (86).

3. Dispositif de séparation axiale (24) selon l'une des revendications précédentes, **caractérisé en ce qu'**il présente une partie de battage ou **en ce qu'**un dispositif de battage (20) est prévu en amont de lui.

4. Moissonneuse-batteuse (10) qui présente un dispositif axial de séparation (24) selon l'une des revendications précédentes.
